# EUROPÄISCHE PATENTSCHRIFT

(11) **EP 2 386 121 B1**
(45) Veröffentlichungstag und Bekanntmachung des Hinweises auf die Patenterteilung: **27.06.2018**
(21) Anmeldenummer: 09799365.3
(22) Anmeldetag: 30.12.2009
(51) Int. Cl.: H01L 31/042, H02J 1/00, H02J 5/00, H02S 20/10

(54) **STROMVERSORGUNGSSYSTEM MIT DIREKT VON EINEM PHOTOVOLTAIK-KRAFTWERK GESPEISTER HOCHSPANNUNGSGLEICHSTROMÜBERTRAGUNG**
POWER SYSTEM WITH PHOTOVOLTAIC GENERATOR DIRECTLY FEEDING AN HVDC TRANSMISSION SYSTEM
ALIMENTATION EN ENERGIE ELECTRIQUE AVEC UN GÉNÉRATEUR PHOTOVOLTAIQUE POUR L'ALIMENTATION DIRECTE D'UNE INSTALLATION DE TRANSPORT DE COURANT CONTINU A HAUTE TENSION

(30) Priorität: 12.01.2009 DE 102009004679
(43) Veröffentlichungstag der Anmeldung: 16.11.2011
(73) Patentinhaber: Siemens Aktiengesellschaft, 80333 München (DE)
(72) Erfinder: LAUINGER, Thomas, 63843 Niedernberg (DE); HÄUSLER, Marcus, 91056 Erlangen (DE)
(86) Internationale Anmeldenummer: PCT/EP2009/068021
(87) Internationale Veröffentlichungsnummer: WO 2010/079112

(56) Entgegenhaltungen:
- EP-A1- 0 373 234
- EP-A2- 1 184 963
- Minder, Rudolf: "Very Large Scale PV-Systems - Zukunftsvisionen und Resultate der IEA-Diskussion" Forschungsverbund Sonnenenergie 1. Januar 2003 (2003-01-01), Seiten 67-70, XP002588271 Berlin, Deutschland ISSN: 0939-7582 Gefunden im Internet: URL:http://www.fvee.de/fileadmin/publikati onen/Themenhefte/th2002/th2002_04_03.pdf [gefunden am 2010-06-22] in der Anmeldung erwähnt
- Anonymous: "Datasheet Powergate Plus 500 kW Commercial Solar PV Inverter" 31. Oktober 2008 (2008-10-31), XP002588272 Gefunden im Internet: URL:http://www.affordable-solar.com/admin/ product_doc/Doc_Satcon_PowerGate_Plus_500k W_72dpi_20081111124050.pdf [gefunden am 2010-06-22]

## Beschreibung

Die Erfindung betrifft eine Photovoltaik-Einrichtung zur Hochspannungserzeugung sowie ein Stromversorgungssystem in welchem eine HGÜ durch eine derartige PV-Einrichtung gespeist wird. Insbesondere betrifft die Erfindung ein Stromversorgungssystem bzw. eine Photovoltaik-Einrichtung, die für die Stromversorgung von sich in weiter oder auch naher Entfernung zur Photovoltaik-Einrichtung befindlichen Verbrauchern geeignet ist. Photovoltaik-Einrichtungen bzw. -Anlagen kommen zunehmend zum Einsatz in sogenannten Photovoltaik-Kraftwerken, die vornehmlich in sonnenreichen Regionen installiert werden und zentral Strom für die vorhandenen und häufig weit entfernten verbraucherseitigen Stromversorgungsnetze erzeugen sollen. Solche Photovoltaik-Einrichtungen werden bevorzugt großflächig angelegt und beispielsweise in Wüstengebieten installiert, um maßgeblich einen Beitrag zur Stromgewinnung aus Solarenergie zu leisten. Diese Anlagen werden auch als "Very Large Scale Photovoltaic Systems", kurz VLS-PV-Systeme, bezeichnet und beispielsweise in dem Artikel "Very Large Scale PV-Systems" von Dr. Rudolf Minder in dem Themenheft "FVS-Themen 2002" auf den Seiten 67 bis 70 vorgestellt (Veröffentlichung vom Forschungsverbund Sonnenenergie, Berlin, Deutschland, im Internet unter der URL: www.fv-sonnenenergie.de). Dort wird ein modularer Aufbau mehrerer PV-Module vorgeschlagen, wobei dieser nicht näher beschrieben wird. Zur Übertragung der gewonnenen Elektrizität werden verschiedene Transport-Techniken, u.a. auch die Hochspannungs-Gleichstrom-Übertragung, kurz HGÜ genannt, vorgeschlagen.

Es ist also bekannt, in Stromversorgungssystemen, die große zentrale, Strom erzeugende Photovoltaik-Kraftwerke umfassen, den erzeugten Strom mittels einer Hochspannungs-Gleichstrom-Übertragung (HGÜ) über weite Strecken effizient zu den entfernten Verbrauchern hin bzw. zu verbraucherseitigen Stromnetzen zu transportieren. Dazu wird die erzeugerseitig von PV-Modulen erzeugte Gleichspannung zunächst über einen Wechselrichter in eine Wechselspannung umgewandelt und dann über einen Transformator auf eine hohe Wechselspannung transformiert (1. Umformung). Eine erzeugerseitig installierte zentrale Umformstation wandelt diese hohe Wechselspannung (Wechselstrom-Hochspannung) in eine Gleichstrom-Hochspannung um (2. Umformung) und speist diese dann in die HGÜ-Strecke ein. An deren Ende wiederum befindet sich in der Nähe der Verbraucher eine weitere zentrale Umformstation zur Rückwandlung der Gleichstrom-Hochspannung in eine Wechsel-Hochspannung (3. Umformung). Diese ist geeignet, in verbraucherseitig vorhandene Stromnetze eingespeist zu werden. Demnach ist sowohl erzeugerseitig wie verbraucherseitig eine Umwandlung der elektrischen Energie erforderlich, d.h. insgesamt einer dreifache Umformung erforderlich. Dies wiederum erfordert mehrere Wechselrichter und insbesondere eine erzeugerseitig, also vor der Einspeisung in die HGÜ-Strecke, installierte zentrale Umformstation. Damit sind hohe Investitionskosten verbunden. Außerdem sind mit jeder Umwandlung der elektrischen Spannung elektrische Energieverluste verbunden.

Die europäische Patentanmeldung EP 1 184 963 A2 offenbart ein Hochspannungs-Gleichstrom-Verteilnetz. An dieses Verteilnetz kann mittels eines Hochspannungs-Gleichstromwandlers ein Solar-Kraftwerk angeschlossen werden, welches Energie in das Verteilnetz einspeist.

Aus der europäischen Patentschrift EP 0 373 234 A1 ist ein Solargenerator bekannt, der Solarzelleneinrichtungen und Seile zur Halterung der Solarzelleneinrichtungen aufweist. In Seilvernetzungen sind mehrere Solarmodule angeordnet. Die Solarmodule können dabei beispielsweise elektrisch in Reihe geschaltet sein. Die Veröffentlichung "Minder, Rudolf: "Very Large Scale PV-Systems - Zukunftsvisionen und Resultate der IEA-Diskussion"" 1. Januar 2003 (2003-01-01), Seiten 67-70, Berlin, Deutschland" beschreibt photovoltaische Großkraftwerke, für deren Ankopplung auch HGÜ angedacht werden. Eine direkte Ankopplung wird allerdings weder direkt erwähnt noch indirekt vorgeschlagen.

Es ist Aufgabe der vorliegenden Erfindung, eine Photovoltaik-Einrichtung und damit ein Stromversorgungs-System der eingangs genannten Art zu schaffen, bei der die eingangs genannten Nachteile in vorteilhafter Weise überwunden werden. Insbesondere soll die Photovoltaik-Einrichtung so gestaltet sein, dass die von ihr erzeugte elektrische Energie sehr effizient und mit möglichst geringem technischen Aufwand über eine Hochspannungs-Gleichstrom-Übertragungsstrecke zu der Verbraucherseite übertragen werden kann.

Gelöst wird die oben genannte Aufgabe durch eine Photovoltaik-Einrichtung mit den Merkmalen des Anspruchs 1, sowie ein Stromversorgungssystem nach Anspruch 10. Demnach wird vorgeschlagen, dass die Photovoltaik-Module zur Erzeugung einer Gleichspannung, die die Spannungsfestigkeit der Photovoltaik-Module übersteigt und für eine Hochspannungs-Gleichstrom-Übertragung geeignet ist, in Reihenschaltung miteinander verschaltet sind, und dass das Stromversorgungs-System eine mit einem für Verbraucher eingerichtete Stromversorgungs-Netz verbindbare Umformstation aufweist und eine Hochspannungs-Gleichstrom-Übertragungsstrecke umfasst, um die von der Photovoltaik-Einrichtung erzeugte Gleichspannung in den Hochspannungs-Bereich zu der Umformstation zu übertragen. Durch diese Merkmalskombination wird bereits erzeugerseitig am Ort der Photovoltaik-Einrichtung eine ausreichend hohe Gleichspannung erzeugt, die direkt in eine Hochspannungs-Gleichstrom-Übertragungsstrecke eingespeist und zur Verbraucherseite hin übertragen werden kann. Am Ende der HGÜ-Strecke ist dann lediglich eine Umsetzung von der übertragenen Gleichspannung in eine gewünschte Wechselspannung erforderlich. Insbesondere werden die in den herkömmlichen Systemen erzeugerseitig benötigten Wechselrichter und HGÜ-Gleichrichter-Stationen eingespart. Die von der Photovoltaik-Einrichtung erzeugte Gleichspannung übersteigt die Spannungsfestigkeit der einzelnen Photovoltaik-Module, die gegenwärtig bei etwa max. 1 kV liegt, um ein Vielfaches und liegt in einem Hochspannungs-Bereich von mehreren hundert kV. Vorzugsweise ist die Photovoltaik-Einrichtung so gestaltet, dass jeweils eine erste Anzahl der Photovoltaik-Module zu einem Modul-Block verschaltet sind, der über Isolierungselemente, beispielsweise Keramik- oder Kunststoffisolatoren, gegen das Erdpotential isoliert ist, und dass jeweils eine zweite Anzahl der Modulblöcke einen Modul-Strang bilden, der zumindest eine Teilspannung der erzeugten Gleichspannung liefert. Hierdurch wird eine elektrisch isolierte Aufständerung von blockweise angeordneten PV-Modulen erreicht, so dass alle PV-Module, Teile der Aufständerung sowie deren nähere Umgebung auf ein beliebiges elektrisches Potential angehoben bzw. aufgeladen werden können. Auch wird die für die HGÜ-Übertragung erforderliche Hochspannung allein durch entsprechende Reihen- und Parallelschaltung von PV-Modulen erzeugt.

Von Vorteil ist es auch, wenn die jeweils zu einem Modul-Block verschalteten Photovoltaik-Module in einer aufgeständerten Rahmenkonstruktion montiert sind, wobei vorgesehen sein kann, dass die Rahmenkonstruktion über eine Potentialanbindung mit dem geringsten, einem mittleren oder dem höchsten Potentialniveau des Modul-Blocks verbunden ist. Eine Potentialanbindung an das geringste oder höchste Potential eines PV-Blocks ist sinnvoll, wenn die Anzahl der in Reihe geschalteten PV-Module auf einem Block so angelegt ist, dass auf einem PV-Block die Summenspannung Upvb unterhalb der Spannungsfestigkeit der einzelnen PV-Module bleibt Mit Spannungsfestigkeit wird hier die max. Spannung bezeichnet, die zwischen dem inneren Zellenstring und dem Modulrahmen bzw. der näheren Umgebung des Moduls auftreten darf. Je nach Typ der eingesetzten PV-Module kann durch die Art der Potentialanbindung eine positive oder negative Potentialdifferenz zwischen den inneren Zellenstrings der Module und den Modulrahmen bzw. der Rahmenkonstruktion eingestellt werden. Dies kann erforderlich werden, um ggf. Degradationseffekte der Module zu vermeiden oder um entsprechende Empfehlungen oder Vorgaben der Hersteller einzuhalten. Eine Potentialanbindung an das Mittenpotential eines PV-Blocks ist dann besonders sinnvoll, wenn die Reihenschaltung der PV-Module auf einem PV-Block mindestens so lang ausgelegt ist, dass auf den einzelnen PV-Blöcken Summenspannungen Upvb auftreten, die oberhalb der Spannungsfestigkeit der einzelnen PV-Module (von z.B. 1 KV) liegen können. Hierdurch wird erreicht, dass zwischen den einzelnen PV-Modulen und der Aufständerung nur maximal eine Potentialdifferenz auftreten kann, die der Hälfte der von dem jeweiligen PV-Block generierten Spannung entspricht. Auf diese Weise kann auf einem PV-Block das Doppelte der max. zulässigen Spannung eines Einzelmoduls erzeugt werden.

Es kann zudem vorteilhaft sein, wenn die Rahmenkonstruktion flächig ausgebildet wird (z.B. durch ein leitfähiges Gitternetz). Dadurch wird das Erdpotential gegenüber den Modulen abgeschirmt und es fällt an diesen nur die Potentialdifferenz zur Rahmenkonstruktion an.

Vorzugsweise werden jeweils mindestens zwei der Modul-Stränge in Reihe geschaltet und mehrere der in Reihe geschalteten Modul-Stränge parallel geschaltet, um die im Hochspannungs-Bereich zu übertragende Gleichspannung zu erzeugen. In diesem Zusammenhang ist es von Vorteil, wenn die Verschaltung der Modul-Stränge eine erste Sammelschiene und eine zweite Sammelschiene aufweist, so dass die erzeugte Gleichspannung über diese Sammelschienen abgreifbar ist.

Weiterhin ist es vorteilhaft, wenn die Umformstation am Ende der Gleichspannungs-Übertragungsstrecke einen Wechselrichter für die Umwandlung der übertragenen Gleichspannung in eine Wechselspannung aufweist, wobei die Umformstation auch mit einer Regelungs-Schaltung für ein sogenanntes "MPP-Tracking" (MPP: Maximum Power Point) ausgestattet ist. Damit wird der Arbeitspunkt des Wechselrichters so eingestellt, dass die maximal mögliche Leistung aus der PV-Einrichtung entnommen und zur Einspeisung in das verbraucherseitige Netz umgeformt werden kann.

Das System und die HGÜ-Strecke selbst können auch einpolig ausgeführt sein, so dass nur eine Sammelschiene sowie Leitung (Freileitung oder Kabel) installiert werden. Die HGÜ-Strecke kann sowohl für große Entfernungen, vorzugsweise über Freileitungen, wie auch für kurze Entfernungen, vorzugsweise über Kabel, ausgelegt sein.

Die Erfindung und die sich daraus ergebenden Vorteile werden nachfolgend anhand eines Ausführungsbeispiels und unter Bezugnahme auf die beilegenden Zeichnungen näher beschrieben, wobei:
- Fig. 1: in schematischer Darstellung den Aufbau eines erfindungsgemäßen Stromversorgungssystems zeigt; und
- Fig. 2: den schematischen Aufbau einer erfindungsgemäßen Photovoltaik-Einrichtung zeigt.

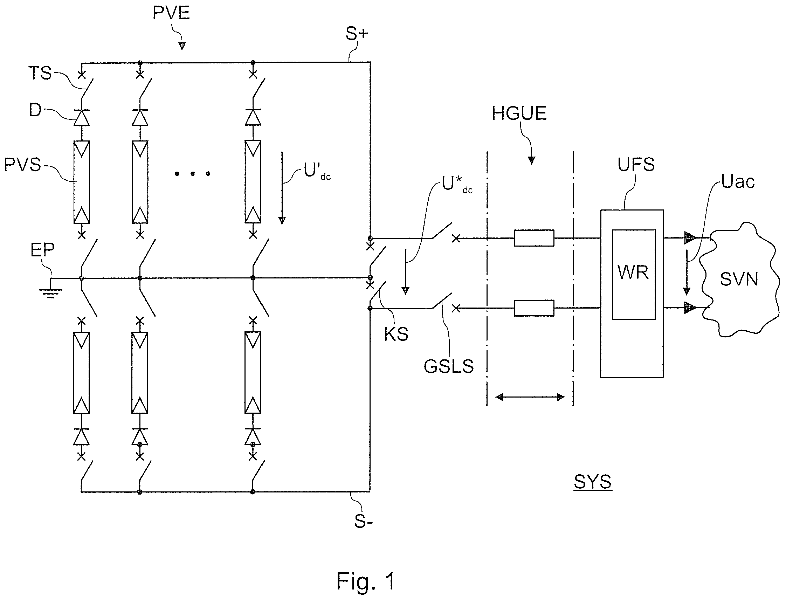

In Figur 1 ist der schematische Aufbau eines Stromversorgungssystems SYS gemäß der Erfindung dargestellt. Das System SYS umfasst im wesentlichen eine Photovoltaik-Einrichtung PVE, die erzeugerseitig an einer zentralen Stelle, vorzugsweise in einer sonnenreichen Region, aufgebaut ist und Energie zur Einspeisung in eine Hochspannungs-Gleichspannungs-Übertragungsstrecke HGUE liefert. Die Photovoltaik-Einrichtung PVE erzeugt aufgrund ihrer besonderen Konzeption eine Gleichspannung Udc, die im Hochspannungsbereich von mehreren Hundert kV liegen kann und direkt in die Hochspannungs-Gleichstrom-Übertragungsstrecke HGUE eingespeist werden kann. Die Übertragungsstrecke HGUE kann durchaus Hunderte oder gar Tausende von Kilometer umfassen und endet verbraucherseitig an einer zentralen Umformstation UFS. Es kann aber auch eine kurze Entfernung realisiert sein, wobei dann die HGÜ-Strecke vorzugsweise über ein Kabel geführt wird. Die Umformstation UFS weist einen Wechselrichter WR auf und wandelt im wesentlichen die übertragene Gleichspannung Udc, in eine gewünschte Wechselspannung Uac um, um diese dann in ein dortiges, z.B. örtliches, Stromversorgungsnetz SVN einzuspeisen.

Zur direkten Erzeugung einer Hochspannungs-Gleichspannung Udc von beispielsweise 500 kV, umfasst die Photovoltaik-Einrichtung PVE mehrere seriell und/oder parallel verschaltete Photovoltaik-Stränge PVS, die jeweils wiederum mehrere PV-Module umfassen.

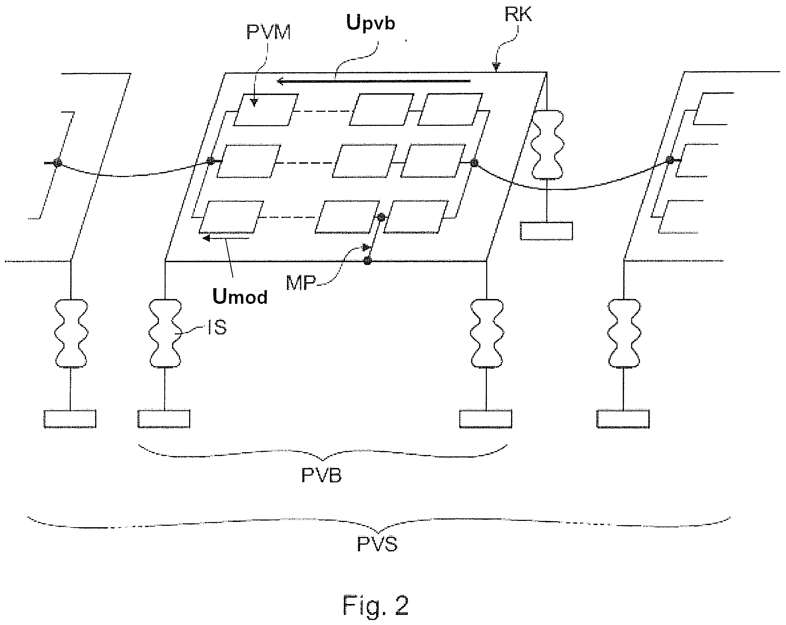

Anhand der Figur 2 ist der Aufbau eines Photovoltaik-Strangs PVS näher im Detail dargestellt. Wie dort zu sehen ist, wird für jeden Strang PVS eine erfindungsgernäße Anordnung von mehreren PV-Modulen PVM in Form von Modul-Blöcken PVB vorgeschlagen, die jeweils auf einer gegen Erde isolierten und aufgeständerten Rahmenkonstruktion RK montiert sind. Durch die Isolierung können die PV-Module PVM auf ein sehr hohes elektrisches Potential angehoben werden. Zur Isolierung werden z.B. Keramik- oder Kunststoff-Isolatoren IS eingesetzt.

Durch eine parallele und serielle Verschaltung von jeweils N Modulen PVM je Block PVB und eine vorzugsweise serielle Verschaltung von M Blöcken ergibt sich ein Strang PVS mit insgesamt NxM Modulen.

Wie die Fig. 1 zeigt, sind in der Anlage bzw. Einrichtung PVE dann die Photovolatik-Stränge PVS wiederum seriell und parallel verschaltet. Dabei sind z.B. jeweils zwei Stränge PVS in Reihe geschaltet und durch Leistungsdioden D sowie Trennschalter TS mit einer oberen Sammelschiene S+ sowie mit einer unteren Sammelschiene S- verbunden. Mehrere dieser in Reihe geschalteten Stränge PVS sind parallel verschaltet und mit den Sammelschienen S+ bzw. S- verbunden, um schließlich ausgangsseitig eine im gewünschten Hochspannungsbereich befindliche Gleichspannung Udc* zu liefern. Für eine beispielsweise 600 MW starke Anlage sind etwa Y = 68 Modul-Stränge erforderlich. Demnach sind also insgesamt YxNxM Module PCM in der Einrichtung PVE miteinander verschaltet. Neben den Trennschaltern TS, sind auch noch Kurzschlussschalter KS zum Kurzschliessen der Sammelschienen S+, S- sowie Gleichstrom-Leistungsschalter GSLS zum Freischalten der Hochspannungs-Gleichstrom-Übertragungsstrecke (HGUE) vorgesehen.

Jeder Modul-Strang PVS kann eine max. Ausgangsspannung von U'dc = 500 KV erzeugen und einen max. Strom bis zu 25 A liefern. Bei einer Systemkennlinie mit einem Füllfaktor von ca. 70% entspricht dies einer maximalen Einzelleistung von 8,8 MW. Auf der oberen Sammelschiene S+ liegt somit ein Potential von max. +500 KV gegenüber Erdpotential EP an. Auf der unteren Schiene S- wiederum liegt ein negatives Potential von max. -500 KV (max bezieht sich auf den Betrag der Spannung)gegenüber Erdpotential EP an. Alle Stränge zusammen können etwa max. 850 A an Strom in die HGÜ-Strecke liefern. Über entsprechende Schalter TS und KS wird die von der Photovoltaik-Einrichtung PVE erzeugte Gleichspannung Udc*, die in diesem Falle etwa 1000 KV beträgt, abgegriffen und direkt auf die Hochspannungs-Gleichstrom-ÜbertragungsStrecke HGUE geschaltet. Durch diese Anordnung wird bereits auf der Erzeugerseite und vor Einspeisung in die Übertragungsleitung HGUE eine erhebliche Einsparung im Bereich der Systemtechnik erreicht. Insbesondere entfallen die bei üblichen Systemen erforderlichen Umrichter und Transformatoren sowie die erzeugerseitige Umspannstation am Eingang der HGUE-Strecke. Zusätzlich reduzieren sich auch die Verkabelungskosten im Modulfeld, da fast ausschließlich geringe Leiterquerschnitte eingesetzt werden können. Als weiterer Vorteil erhöht sich der Gesamtwirkungsgrad des Systems, da alle erzeugerseitigen Wandlungs- und Transformationsverluste entfallen.

Auf der Verbraucherseite am Ende der HGUE-Übertragungsstrecke befindet sich eine zentrale Umformstation UFS, die im wesentlichen einen DC/AC-Wechselrichter aufweist, welcher die übertragene Gleichspannung Udc* in eine gewünschte Wechselspannung Uac wandelt. Daneben weist die Umformstation UFS auch eine Regelungs- bzw. Überwachungseinrichtung auf, die zur Regelung des Modulfeldes auf den Arbeitspunkt maximaler Leistung hin (sogenanntes MPP-Tracking) ausgerichtet ist. Dadurch wird in Abhängigkeit der aktuell von der Photovoltaik-Einrichtung PVE erzeugten und sich ändernden elektrischen Leistung eine Einstellung des Arbeitspunktes des Wechselrichters WR auf eine maximale Leistungsentnahme hin angepasst.

Um bei dem gezeigten System SYS erzeugerseitig die direkte Einspeisung einer Hochspannung-Gleichspannung Udc zu erreichen ist neben der Verschaltung der Stränge PVS insbesondere auch der Aufbau eines jeden Strangs PVS wesentlich. Wie anhand der Figur 2 gezeigt, umfasst jeder Strang PVS mehrere beispielsweise Modul-Blöcke PVB, die wiederum mehrere Module PVM umfassen, wobei jeder Block PVB sich auf einer Rahmenkonstruktion RK befindet und mittels Isolatoren IS gegen Erdungspotential isoliert ist. Durch die Verschalung und Aufständerung können die sich jeweils auf dem Rahmen RK befindlichen Module PVM sowie auch deren nähere Umgebung auf ein beliebiges elektrisches Potential aufladen. Der Spannungsabfall über einen jeden Modulblock PVB beträgt hier z.B. 2 KV. Das Potential der Modulblöcke nimmt durch die Reihenschaltung derselben zu. Beispielsweise werden hier 250 Blöcke à 2 KV zu insgesamt 500 KV verschaltet (siehe auch Figur 1). Zudem ist die Rahmenkonstruktion RK über eine Potentialanbindung MP mit einem Potentialniveau des Modul-Blocks PVB verbunden, um das Potentialniveau der Aufständerung bzw. der Rahmenkonstruktion auf dieses Potentialniveau eines jeden Blockes PVB zu legen. Die Potentialanbindung MP kann mit dem geringsten, einem mittleren oder dem höchsten Potentialniveau des Modul-Blocks verbunden sein. Eine Potentialanbindung an das geringste oder höchste Potential eines PV-Blocks ist sinnvoll, wenn die Anzahl der in Reihe geschalteten PV-Module auf einem Block so angelegt ist, dass auf einem PV-Block die Summenspannung Upvb unterhalb der Spannungsfestigkeit der einzelnen PV-Module bleibt. Je nach Typ der eingesetzten PV-Module kann durch die Art der Potentialanbindung eine positive oder negative Potentialdifferenz zwischen den inneren Zellenstrings der Module und den Modulrahmen bzw. der Rahmenkonstruktion eingestellt werden. Dies kann erforderlich werden, um ggf. Degradationseffekte der Module zu vermeiden oder um entsprechende Empfehlungen oder Vorgaben der Hersteller einzuhalten. Eine Potentialanbindung an das Mittenpotential eines PV-Blocks ist dann besonders sinnvoll, wenn die Reihenschaltung der PV-Module auf einem PV-Block mindestens so lang ausgelegt ist, dass auf den einzelnen PV-Blöcken Summenspannungen Upvb auftreten, die oberhalb der Spannungsfestigkeit der einzelnen PV-Module (von z.B. 1 KV) liegen können.

Mit Umodmax wird hier die Spannungsfestigkeit eines Einzelmoduls bezeichnet. Diese gibt die maximal zulässige Potentialdifferenz an, die zwischen den dem inneren Zellenstring und damit den elektrischen Anschlüssen des Moduls und dem Modulrahmen bzw. der näheren Umgebung auftreten darf.

Mit Umod wird hier die real existierende Spannung bzw. Potentialdifferenz zwischen inneren Zellenstring und damit den elektrischen Anschlüssen des Moduls und dem Modulrahmen bzw. der näheren Umgebung bezeichnet. Umod ist für jedes Modul einer Reihenschaltung auf einem PVB unterschiedlich. Es muss stets Umod < Umodmax gelten.

Die hier eingesetzten Photovoltaik-Module PVM sind vorzugsweise baugleich und weisen in etwa die gleiche Spannungsfestigkeit auf. Würden Module mit unterschiedlichen Spannungsfestigkeiten eingesetzt, könnte der Fall auftreten, dass die Spannung Udc* die Spannungsfestigkeiten aller eingesetzten Module PVM überschreitet.

Das hier beschriebene Stromversorgungssystem kann auch so ausgestaltet werden, dass an mehreren örtlich verschiedenen Punkten in eine HGÜ-Strecke bzw. -Leitung eingespeist und an mehreren örtlich verschiedenen Punkten Energie entnommen werden kann (sog. Mehr-Punkt-Verbindung).

Die ebenfalls hier beschriebene Möglichkeit der Parallelschaltung mehrerer Modulfelder kann auch so ausgestaltet werden, dass an mehreren Stellen in die gleiche HGÜ-Leitung eingespeist wird. Die Örtlichkeiten der Modulfelder können dabei viele Kilometer auseinander liegen. Dabei sollte dann beachtet werden, dass die verschiedenen Felder möglichst gleich ausgerichtet sind und auch näherungsweise dem gleichen Sonnenstand ausgesetzt sind. Deshalb wird die max. mögliche Entfernung parallel geschalteter Felder wohl unterhalb von 500 km liegen.

Die Möglichkeit, an mehreren Stellen aus der HGÜ-Strecke bzw. -Leitung Energie zu entnehmen, erfordert dann an jeder dieser Stellen eine Umformstation mit Wechselrichter. Dies kann durchaus sinnvoll sein, wenn ohnehin entlang weiter Transportwege mehrere Verbrauchszentren versorgt werden sollen. In diesem Fall sollte vorgesehen sein, dass alle Umformstationen regelungstechnisch gekoppelt sind, um das Modulfeld im Punkt der maximalen Leistung zu betreiben. Vorzugsweise übernimmt dabei eine der Stationen als "Master" die MPP-Regelung und steuert alle weiteren Stationen auf entsprechend miteinander abgestimmte Arbeitspunkte, so dass sich in Summe der für das PV-Kraftwerk bestmögliche Arbeitspunkt ergibt.

Insgesamt ergibt sich mit der erfindungsgemäßen Anordnung eine direkte und besonders kostengünstige Einspeisung der erzeugten Energie in eine Hochspannungs-Gleichstrom-Übertragungsstrecke. Auf der Verbraucherseite muß dann lediglich in einer zentralen Umformstation auf die dort gewünschte Spannung umgewandelt werden. Die Erfindung zeichnet sich besonders durch eine kostengünstige Systemtechnik aus, was sowohl die Investitionskosten wie auch die Betriebskosten anbelangt.

### Bezugszeichenliste

- SYS: Stromversorgungssystem
- PVE: Photovoltaik-Einrichtung
- PVS: Photovoltaik-Strang (Modul-Strang)
- PVB: Photovoltaik-Block (Modul-Block)
- PVM: Photovoltaik-Modul

- TS: Trennschalter
- KS: Kurzschlussschalter
- GSLS: Gleichstrom-Leistungsschalter
- D: Dioden (-paket)
- EP: Erdpotential
- S+, S-: Sammelschienen

- HGUE: Hochspannungs-Gleichstrom-Übertragungsstrecke

- UFS: Umformstation
- WR: Wechselrichter (mit MPP-Regelung)
- SVN: Stromversorgungsnetz (verbraucherseitig)

- Udc*: erzeugte und übertragene Gleichspannung im Hochspannungs-Bereich
- Udc': Teilspannung (erzeugerseitig, pro Strang PVS)
- Umodmax: Spannungsfestigkeit eines Einzelmoduls
- Umod: real existierende Spannung bzw. Potentialdifferenz (Umod < Umodmax)
- Upvb: Summenspannung eines Modulblockes
- Uac: Wechselspannnung (verbraucherseitig)

- RK: Rahmenkonstruktion für Modul-Block
- IS: Isolatoren für Aufständerung

## Patentansprüche

1. Photovoltaik-Einrichtung (PVE), die mehrere Gleichspannungs-erzeugende Photovoltaik-Module (PVM) umfasst, wobei die Photovoltaik-Module (PVM) in Reihenschaltung miteinander verschaltet sind und somit eine die Spannungsfestigkeit (Umodmax) der Photovoltaik-Module (PVM) um ein Vielfaches übersteigende und zur Hochspannungs-Gleichstrom-Übertragung geeignete Gleichspannung (Udc*) erzeugen,
**dadurch gekennzeichnet dass**
die erzeugte Gleichspannung (Udc*) mehrere hundert Kilovolt beträgt und die Photovoltaik-Einrichtung dazu eingerichtet ist, im Betrieb direkt auf eine Hochspannungs-Gleichstrom-Übertragungsstrecke (HGUE) geschaltet zu werden, wodurch die für die HGÜ-Übertragung erforderliche Hochspannung allein durch entsprechende Reihenschaltung von Photovoltaik-Modulen erzeugt wird.

2. Photovoltaik-Einrichtung (PVE) nach Anspruch 1, **dadurch gekennzeichnet, dass** jeweils eine erste Anzahl (N) der Photovoltaik-Module (PVM) zu einem Modul-Block (PVB) verschaltet sind, der über Isolierungselemente (IS) gegen das Erdpotential (EP) isoliert ist, und dass jeweils eine zweite Anzahl (M) der Modul-Blöcke (PVB) einen Modul-Strang (PVS) bilden, der zumindest eine Teilspannung (Udc') der erzeugten Gleichspannung (Udc*) liefert.

3. Photovoltaik-Einrichtung (PVE) nach Anspruch 2, **dadurch gekennzeichnet, dass** jeweils mindestens zwei der Modul-Stränge (PVS) in Reihe geschaltet sind und mehrere der in Reihe geschalteten Modul-Stränge (PVS) parallel geschaltet sind, um die zur Hochspannungs-Gleichstrom-Übertragung geeignete Gleichspannung (Udc*) zu erzeugen.

4. Photovoltaik-Einrichtung (PVE) nach Anspruch 3, **dadurch gekennzeichnet, dass** die Verschaltung der Modul-Stränge (PVS) eine erste Sammelschiene (S+) aufweist und eine zweite Sammelschiene (S-) aufweist, so dass die zur Hochspannungs-Gleichstrom-Übertragung geeignete Gleichspannung (Udc*) über die Sammelschienen (S+; S-) abgreifbar ist.

5. Photovoltaik-Einrichtung (PVE) nach Anspruch 4, **dadurch gekennzeichnet, dass** die Photovoltaik-Einrichtung(PVE) einen oder mehrere Kurzschlussschalter (KS) zum Kurzschliessen der Sammelschienen (S+, S-) aufweist.

6. Photovoltaik-Einrichtung (PVE) nach einem der Ansprüche 1 bis 5, **dadurch gekennzeichnet, dass** die Photovoltaik-Einrichtung (PVE) einen oder mehrere Gleichstrom-Leistungsschalter (GSLS) zum Freischalten der Hochspannungs-Gleichstrom-Übertragungsstrecke (HGUE) aufweist.

7. Photovoltaik-Einrichtung (PVE) nach einem der Ansprüche 2 bis 6, **dadurch gekennzeichnet, dass** die jeweils zu einem Modul-Block (PVB) verschalteten Photovoltaik-Module (PVM) in einer aufgeständerten Rahmenkonstruktion (RK) montiert sind.

8. Photovoltaik-Einrichtung (PVE) nach Anspruch 7, **dadurch gekennzeichnet, dass** die Rahmenkonstruktion (RK) über eine Potentialanbindung (MP) mit dem geringsten, einem mittleren oder dem höchsten Potentialniveau des Modul-Blocks (PVB) verbunden ist, derart, dass die Potentialdifferenz (Umod) zwischen den einzelnen Modulen und der Rahmenkonstruktion (RK) für keines der Photovoltaik-Module (PVM) auf einem Modul-Block (PVB) deren Spannungsfestigkeit (Umodmax) übersteigt.

9. Photovoltaik-Einrichtung (PVE) nach Anspruch 7 oder 8, **dadurch gekennzeichnet, dass** die Rahmenkonstruktion flächig ausgebildet ist, insbesondere als ein leitfähiges Gitternetz ausgebildet ist.

10. Stromversorgungssystem (SYS) mit einer Photovoltaik-Einrichtung (PVE) nach einem der Ansprüche 1-9, wobei
das Stromversorgungssystem (SYS) mindestens eine mit einem für Verbraucher eingerichtetes Stromversorgungsnetz (SVN) verbindbare Umformstation (UFS) aufweist und eine Hochspannungs-Gleichstrom-Übertragungsstrecke (HGUE) umfasst, die die von der Photovoltaik-Einrichtung (PVE) erzeugte Gleichspannung (Udc*) im Hochspannungs-Bereich zu der Umformstation (UFS) überträgt, und wobei die von der Photovoltaik-Einrichtung (PVE) erzeugte Gleichspannung (Udc*) direkt auf die Hochspannungs-Gleichstrom-Übertragungsstrecke (HGUE) geschaltet ist.

11. Stromversorgungssystem (SYS) nach Anspruch 10, **dadurch gekennzeichnet, dass** jeweils eine erste Anzahl (N) der Photovoltaik-Module (PVM) zu einem Modul-Block (PVB) verschaltet sind, der über Isolierungselemente (IS) gegen das Erdpotential (EP) isoliert ist, und dass jeweils eine zweite Anzahl (M) der Modul-Blöcke (PVB) einen Modul-Strang (PVS) bilden, der zumindest eine Teilspannung (Udc') der erzeugten Gleichspannung (Udc*) liefert.

12. Stromversorgungssystem (SYS) nach Anspruch 11, **dadurch gekennzeichnet, dass** jeweils mindestens zwei der Modul-Stränge (PVS) in Reihe geschaltet sind und mehrere der in Reihe geschalteten Modul-Stränge (PVS) parallel geschaltet sind, um die zur Hochspannungs-Gleichstrom-Übertragung geeignete Gleichspannung (Udc*) zu erzeugen.

13. Stromversorgungssystem (SYS) nach Anspruch 12, **dadurch gekennzeichnet, dass** die Verschaltung der Modul-Stränge (PVS) eine erste Sammelschiene (S+) aufweist und eine zweite Sammelschiene (S-) aufweist, so dass die zur Hochspannungs-Gleichstrom-Übertragung geeignete Gleichspannung (Udc*) über die Sammelschienen (S+; S-) abgreifbar ist.

14. Stromversorgungssystem (SYS) nach Anspruch 13, **dadurch gekennzeichnet, dass** die Photovoltaik-Einrichtung (PVE) einen oder mehrere Kurzschlussschalter (KS) zum Kurzschliessen der Sammelschienen (S+, S-) aufweist.

15. Stromversorgungssystem (SYS) nach einem der vorhergehenden Ansprüche, **dadurch gekennzeichnet, dass** die Photovoltaik-Einrichtung (PVE) oder das Stromversorgungssystem (SYS) einen oder mehrere Gleichstrom-Leistungsschalter (GSLS) zum Freischalten der Hochspannungs-Gleichstrom-Übertragungsstrecke (HGUE) aufweist.

16. Stromversorgungssystem (SYS) nach einem der Ansprüche 11 bis 15, **dadurch gekennzeichnet, dass** die jeweils zu einem Modul-Block (PVB) verschalteten Photovoltaik-Module (PVM) in einer aufgeständerten Rahmenkonstruktion (RK) montiert sind.

17. Stromversorgungssystem (SYS) nach Anspruch 16, **dadurch gekennzeichnet, dass** die Rahmenkonstruktion (RK) über eine Potentialanbindung (MP) mit dem geringsten, einem mittleren oder dem höchsten Potentialniveau des Modul-Blocks (PVB) verbunden ist, derart, dass die Potentialdifferenz (Umod) zwischen den einzelnen Modulen und der Rahmenkonstruktion (RK) für keines der Photovoltaik-Module (PVM) auf einem Modul-Block (PVB) deren Spannungsfestigkeit (Umodmax) übersteigt.

18. Stromversorgungssystem (SYS) nach Anspruch 16 oder 17, **dadurch gekennzeichnet, dass** die Rahmenkonstruktion flächig ausgebildet ist, insbesondere als ein leitfähiges Gitternetz ausgebildet ist.

19. Stromversorgungssystem (SYS) nach einem der Ansprüche 10 - 18, **dadurch gekennzeichnet, dass** die Hochspannungs-Gleichstrom-Übertragungsstrecke (HGUE) zumindest einpolig über mindestens eine Freileitung und/oder mindestens ein Kabel geführt ist.

20. Stromversorgungssystem (SYS) nach einem der Ansprüche 10 - 19, **dadurch gekennzeichnet, dass** die Umformstation (UFS) einen Wechselrichter (WR) für die Umwandlung der erzeugten und übertragenen Gleichspannung (Udc*) in eine Wechselspannung (Uac) aufweist.

21. Stromversorgungssystem (SYS) nach Anspruch 20, **dadurch gekennzeichnet, dass** die Umformstation (UFS) oder der Wechselrichter (WR) eine Regelungs-Schaltung aufweist, die in Abhängigkeit einer von der Photovoltaik-Einrichtung (PVE) erzeugten und sich ändernden elektrischen Leistung eine Einstellung des Arbeitspunktes des Wechselrichters (WR) auf eine maximale Leistungsentnahme hin anpasst.

## Claims

1. Photovoltaic device (PVE), which comprises a plurality of DC-voltage-generating photovoltaic modules (PVM), wherein the photovoltaic modules (PVM) are interconnected with one another in series and thus generate a DC voltage (Udc*) that exceeds the dielectric strength (Umodmax) of the photovoltaic modules (PVM) by a multiple and that is suitable for high-voltage DC transmission,
**characterized in that**
the generated DC voltage (Udc*) is several hundred kilovolts and the photovoltaic device is configured to be connected directly to a high-voltage DC transmission path (HGUE) during operation, as a result of which the high voltage required for the HVDC transmission is generated only by appropriate series connection of photovoltaic modules.

2. Photovoltaic device (PVE) according to Claim 1, **characterized in that** in each case a first number (N) of photovoltaic modules (PVM) are interconnected to form a module block (PVB), which is insulated with respect to the earth potential (EP) by means of insulation elements (IS), and **in that** in each case a second number (M) of module blocks (PVB) form a module string (PVS), which delivers at least a partial voltage (Udc') of the generated DC voltage (Udc*).

3. Photovoltaic device (PVE) according to Claim 2, **characterized in that** in each case at least two of the module strings (PVS) are connected in series and a plurality of the module strings (PVS) connected in series are connected in parallel in order to generate the DC voltage (Udc*) suitable for high-voltage DC transmission.

4. Photovoltaic device (PVE) according to Claim 3, **characterized in that** the interconnection of the module strings (PVS) has a first busbar (S+) and has a second busbar (S-) so that the DC voltage (Udc*) suitable for high-voltage DC transmission can be tapped by means of the busbars (S+; S-).

5. Photovoltaic device (PVE) according to Claim 4, **characterized in that** the photovoltaic device (PVE) has one or more short-circuit switches (KS) for short-circuiting the busbars (S+, S-).

6. Photovoltaic device (PVE) according to one of Claims 1 to 5, **characterized in that** the photovoltaic device (PVE) has one or more DC power switches (GSLS) for activating the high-voltage DC transmission path (HGUE).

7. Photovoltaic device (PVE) according to one of Claims 2 to 6, **characterized in that** the photovoltaic modules (PVM) interconnected in each case to form a module block (PVB) are mounted in an elevated frame construction (RK).

8. Photovoltaic device (PVE) according to Claim 7, **characterized in that** the frame construction (RK) is connected to the lowest, an average or the highest potential level of the module block (PVB) by means of a potential link (MP) in such a way that the potential difference (Umod) between the individual modules and the frame construction (RK) does not exceed the dielectric strength (Umodmax) of any of the photovoltaic modules (PVM) on a module block (PVB).

9. Photovoltaic device (PVE) according to Claim 7 or 8, **characterized in that** the frame construction is of planar design, in particular is designed as a conductive grid network.

10. Power supply system (SYS) having a photovoltaic device (PVE) according to one of Claims 1-9, wherein the power supply system (SYS) has at least one transformation station (UFS), which can be connected to a power supply network (SVN) configured for loads, and comprises a high-voltage DC transmission path (HGUE), which transmits the DC voltage (Udc*) generated by the photovoltaic device (PVE) in the high-voltage range to the transformation station (UFS), and wherein the DC voltage (Udc*) generated by the photovoltaic device (PVE) is connected directly to the high-voltage DC transmission path (HGUE).

11. Power supply system (SYS) according to Claim 10, **characterized in that** in each case a first number (N) of photovoltaic modules (PVM) are interconnected to form a module block (PVB), which is insulated with respect to the earth potential (EP) by means of insulation elements (IS), and **in that** in each case a second number (M) of module blocks (PVB) form a module string (PVS), which delivers at least a partial voltage (Udc') of the generated DC voltage (Udc*).

12. Power supply system (SYS) according to Claim 11, **characterized in that** in each case at least two of the module strings (PVS) are connected in series and a plurality of the module strings (PVS) connected in series are connected in parallel in order to generate the DC voltage (Udc*) suitable for high-voltage DC transmission.

13. Power supply system (SYS) according to Claim 12, **characterized in that** the interconnection of the module strings (PVS) has a first busbar (S+) and has a second busbar (S-) so that the DC voltage (Udc*) suitable for high-voltage DC transmission can be tapped by means of the busbars (S+; S-).

14. Power supply system (SYS) according to Claim 13, **characterized in that** the photovoltaic device (PVE) has one or more short-circuit switches (KS) for short-circuiting the busbars (S+, S-).

15. Power supply system (SYS) according to one of the preceding claims, **characterized in that** the photovoltaic device (PVE) or the power supply system (SYS) has one or more DC power switches (GSLS) for activating the high-voltage DC transmission path (HGUE).

16. Power supply system (SYS) according to one of Claims 11 to 15, **characterized in that** the photovoltaic modules (PVM) interconnected in each case to form a module block (PVB) are mounted in an elevated frame construction (RK).

17. Power supply system (SYS) according to Claim 16, **characterized in that** the frame construction (RK) is connected to the lowest, an average or the highest potential level of the module block (PVB) by means of a potential link (MP) in such a way that the potential difference (Umod) between the individual modules and the frame construction (RK) does not exceed the dielectric strength (Umodmax) of any of the photovoltaic modules (PVM) on a module block (PVB).

18. Power supply system (SYS) according to Claim 16 or 17, **characterized in that** the frame construction is of planar design, in particular is designed as a conductive grid network.

19. Power supply system (SYS) according to one of Claims 10-18, **characterized in that** the high-voltage DC transmission path (HGUE) is conducted in an at least single-pole manner via at least one overhead line and/or at least one cable.

20. Power supply system (SYS) according to one of Claims 10-19, **characterized in that** the transformation station (UFS) has an inverter (WR) for the conversion of the generated and transmitted DC voltage (Udc*) to an AC voltage (Uac).

21. Power supply system (SYS) according to Claim 20, **characterized in that** the transformation station (UFS) or the inverter (WR) has a control circuit, which adjusts a setting of the operating point of the inverter (WR) to a maximum power withdrawal depending on a changing electrical power generated by the photovoltaic device (PVE).

## Revendications

1. Dispositif (PVE) photovoltaïque, qui comprend plusieurs modules (PVM) photovoltaïques produisant de la tension continue, les modules (PVM) photovoltaïques étant montés en série et produisant ainsi une tension (Udc*) continue dépassant d'un multiple la rigidité diélectrique (Umodmax) des modules (PVM) photovoltaïques et appropriée au transport de courant continu de haute tension,
**caractérisé en ce que** la tension (Udc*) continue produite s'élève à plusieurs centaines de kilovolts et le dispositif photovoltaïque est conçu pour être, en fonctionnement, monté directement sur une section (HGUE) de transport de courant continu de haute tension, grâce à quoi la haute tension nécessaire pour le transport de courant continu de haute tension est produite seulement par un circuit série correspondant de modules photovoltaïques.

2. Dispositif (PVE) photovoltaïque suivant la revendication 1, **caractérisé en ce qu'**un premier nombre (N) des modules (PVM) photovoltaïques est monté en un bloc (PVB) de modules, qui est isolé à l'encontre du potentiel (EP) de terre par des éléments (IS) isolants, et **en ce qu'**un deuxième nombre (M) des blocs (PVB) de modules forme une branche (PVS) de modules, qui fournit au moins une tension (Udc') partielle de la tension (Udc*) continue produite.

3. Dispositif (PVE) photovoltaïque suivant la revendication 2, **caractérisé en ce qu'**au moins deux des branches (PVS) de modules sont montées en série et plusieurs des branches (PVS) de modules montées en série sont montées en parallèle pour produire la tension (Udc*) continue propre au transfert de courant continu de haute tension.

4. Dispositif (PVE) photovoltaïque suivant la revendication 3, **caractérisé en ce que** le montage des branches (PVS) de modules a une première barre (S+) omnibus et a une deuxième barre (S-) omnibus de manière à pouvoir prélever la tension (Udc*) continue propre au transport de courant continu de haute tension par les barres (S+; S-) omnibus.

5. Dispositif (PVE) photovoltaïque suivant la revendication 4, **caractérisé en ce que** le dispositif (PVE) photovoltaïque a un ou plusieurs interrupteurs (KS) de court-circuit pour court-circuiter les barres (S+, S-) omnibus.

6. Dispositif (PVE) photovoltaïque suivant l'une des revendications 1 à 5, **caractérisé en ce que** le dispositif (PVE) photovoltaïque a un ou plusieurs disjoncteurs (GSLS) de courant continu pour déconnecter la section (HGUE) de transport de courant continu de haute tension.

7. Dispositif (PVE) photovoltaïque suivant l'une des revendications 2 à 6, **caractérisé en ce que** les modules (PVM) photovoltaïques, montés en un bloc (PVB) de modules, sont montés dans une construction (RK) de bâti dressé.

8. Dispositif (PVE) photovoltaïque suivant la revendication 7, **caractérisé en ce que** la construction (RK) de bâti est, par l'intermédiaire d'une liaison (MP) de potentiel, reliée au niveau de potentiel le plus bas, à un niveau de potentiel médian ou au niveau de potentiel le plus haut du bloc (PVB) de modules, de façon à ce que la différence (Umod) de potentiel entre les divers modules et la construction (RK) de bâti ne dépasse, pour aucun des modules (PVM) photovoltaïques sur un bloc (PVB) de modules, sa rigidité (Umodmax) diélectrique.

9. Dispositif (PVE) photovoltaïque suivant la revendication 7 ou 8, **caractérisé en ce que** la construction de bâti est constituée en deux dimensions, en étant constituée notamment sous la forme d'un réseau de quadrillage conducteur.

10. Système (SYS) d'alimentation en courant, comprenant un dispositif (PVE) photovoltaïque suivant l'une des revendications 1 à 9,
dans lequel
le système (SYS) d'alimentation en courant a au moins un poste (UFS) de conversion, pouvant être relié à un réseau (SVN) d'alimentation en courant, conçu pour un consommateur et comprend une section (HGUE) de transport de courant continu de haute tension, qui transporte, au poste (UFS) de conversion, dans le domaine de la haute tension, la tension continue produite par le dispositif (PVE) photovoltaïque, et dans lequel la tension (Udc*) continue, produite par le dispositif (PVE) photovoltaïque, est appliquée directement à la section (HGUE) de transport de courant continu de haute tension.

11. Système (SYS) d'alimentation en courant suivant la revendication 10, **caractérisé en ce qu'**un premier nombre (N) des modules (PVM) photovoltaïques est monté en un bloc (PVB) de modules, qui est isolé à l'encontre du potentiel (EP) de terre par des éléments (IS) isolants, et **en ce que** un deuxième nombre (M) des blocs (PVB) de modules forme une branche (PVS) de modules, qui fournit au moins une tension (Udc') partielle de la tension (Udc*) continue produite.

12. Système (SYS) d'alimentation en courant suivant la revendication 11, **caractérisé en ce qu'**au moins deux des branches (PVS) de modules sont montées en série et plusieurs des branches (PVS) de modules montées en série sont montées en parallèle pour produire la tension (Udc*) continue propre au transfert de courant continu de haute tension.

13. Système (SYS) d'alimentation en courant suivant la revendication 12, **caractérisé en ce que** le montage des branches (PVS) de modules a une première barre (S+) omnibus et a une deuxième barre (S-) omnibus de manière à pouvoir prélever la tension (Udc*) continue propre au transport de courant continu de haute tension par les barres (S+; S-) omnibus.

14. Système (SYS) d'alimentation en courant suivant la revendication 13, **caractérisé en ce que** le dispositif (PVE) photovoltaïque a un ou plusieurs interrupteurs (KS) de court-circuit pour court-circuiter les barres (S+, S-) omnibus.

15. Système (SYS) d'alimentation en courant suivant l'une des revendications précédentes, **caractérisé en ce que** le dispositif (PVE) photovoltaïque a un ou plusieurs disjoncteurs (GSLS) de courant continu pour déconnecter la section (HGUE) de transport de courant continu de haute tension.

16. Système (SYS) d'alimentation en courant suivant l'une des revendications 11 à 15, **caractérisé en ce que** les modules (PVM) photovoltaïques, montés en un bloc (PVB) de modules, sont montés en une construction (RK) de bâti dressé.

17. Système (SYS) d'alimentation en courant suivant la revendication 16, **caractérisé en ce que** la construction (RK) de bâti est, par l'intermédiaire d'une liaison (MP) de potentiel, reliée au niveau de potentiel le plus bas, à un niveau de potentiel médian ou au niveau de potentiel le plus haut du bloc (PVB) de modules, de façon à ce que la différence (Umod) de potentiel entre les divers modules et la construction (RK) de bâti ne dépasse, pour aucun des modules (PVM) photovoltaïques sur un bloc (PVB) de modules, sa rigidité (Umodmax) diélectrique.

18. Système (SYS) d'alimentation en courant suivant la revendication 16 ou 17, **caractérisé en ce que** la construction de bâti est constituée en deux dimensions, en étant constituée notamment sous la forme d'un réseau de quadrillage conducteur.

19. Système (SYS) d'alimentation en courant suivant l'une des revendications 10 à 18, **caractérisé en ce que** la section (HGUE) de transport de courant continu de haute tension est appliquée, au moins unipolairement, par l'intermédiaire d'au moins une ligne aérienne et/ou d'au moins un câble.

20. Système (SYS) d'alimentation en courant suivant l'une des revendications 10 à 19, **caractérisé en ce que** le poste (UFS) de conversion a un onduleur (WR) pour transformer la tension (Udc*) continue produite et transportée en une tension (Uac) alternative.

21. Système (SYS) d'alimentation en courant suivant la revendication 20, **caractérisé en ce que** le poste (UFS) de conversion ou l'onduleur (WR) a un circuit de régulation, qui, en fonction d'une puissance électrique produite par le dispositif (PVE) photovoltaïque et se modifiant, adapte un réglage du point de travail de l'onduleur (WR) à un prélèvement de puissance maximum.
